# EUROPEAN PATENT SPECIFICATION

(11) **EP 3 181 621 B1**
(45) Date of publication and mention of the grant of the patent: **23.09.2020**
(21) Application number: 15832505.0
(22) Date of filing: 07.08.2015
(51) Int. Cl.: C08J 9/26, H01M 2/16, H01M 10/0566, H01M 2/14

(54) **POLYOLEFIN MICROPOROUS FILM AND METHOD FOR MANUFACTURING SAME, SEPARATOR FOR NONAQUEOUS ELECTROLYTE SECONDARY CELL, AND NONAQUEOUS ELECTROLYTE SECONDARY CELL**
MIKROPORÖSE POLYOLEFINFOLIE UND VERFAHREN ZUR HERSTELLUNG DAVON, SEPARATOR FÜR SEKUNDÄRZELLE MIT WASSERFREIEM ELEKTROLYT UND SEKUNDÄRZELLE MIT WASSERFREIEM ELEKTROLYT
FILM MICROPOREUX POLYOLÉFINIQUE ET SON PROCÉDÉ DE FABRICATION, SÉPARATEUR POUR ACCUMULATEUR À ÉLECTROLYTE NON AQUEUX ET ACCUMULATEUR À ÉLECTROLYTE NON AQUEUX

(30) Priority: 12.08.2014 JP 2014164200
(43) Date of publication of application: 21.06.2017
(73) Proprietor: Toray Industries, Inc., Tokyo 103-8666 (JP)
(72) Inventor: TOYOTA, Naoki, Nasushiobara-shi Tochigi 329-2763 (JP); SUGATA, Masami, Nasushiobara-shi Tochigi 329-2763 (JP); ISHIHARA, Takeshi, Nasushiobara-shi Tochigi 329-2763 (JP)
(74) Representative: Global IP Europe Patentanwaltskanzlei
(86) International application number: PCT/JP2015/072446
(87) International publication number: WO 2016/024533

(56) References cited:
- EP-A1- 0 919 586
- WO-A1-2010/106984
- WO-A1-2012/081556
- JP-A- 2002 284 918
- JP-A- 2002 355 938
- JP-A- 2005 343 957
- JP-A- 2005 343 958
- JP-A- 2010 194 726
- US-A1- 2009 098 341
- US-A1- 2014 159 271

## Description

### TECHNICAL FIELD

The present invention relates to a polyolefin microporous membrane and a separator for a non-aqueous electrolyte secondary battery produced using the same. More particularly, the present invention relates to a polyolefin microporous membrane having excellent safety and a separator for a non-aqueous electrolyte secondary battery produced using the same.

### BACKGROUND ART

In order to prevent internal shorting in a battery using a non-aqueous electrolytic solution such as a lithium ion battery, a separator having a shutdown function for shutting down a reaction at a point exceeding a prescribed temperature is essential. A battery separator typically consists of a microporous membrane. If the temperature increases, the separator shrinks and the fine pores are blocked at around the melting point, which causes the shutdown of the battery reaction. If an increase in temperature continues further, the microporous membrane switches from shrinking to expanding at a certain temperature, ultimately resulting in membrane puncture (meltdown).

In the production of a separator, the strength of the separator is often enhanced by imparting the separator with orientation by means of stretching or the like. A separator having such orientation may exhibit anisotropy with regard to not only strength, but also temperature characteristics such as the shutdown temperature. For example, because separators are ordinarily wound in a state under tension applied in the MD (machine direction), if a battery operates abnormally and reaches a high-temperature state even after shutdown, there is a risk that the separator may be punctured, which may cause shorting. Therefore, in order to maintain strength in the MD, it is preferable for the meltdown temperature or maximum shrinkage temperature in the MD to be high. On the other hand, if the time between the beginning of shutdown and completion of blocking of the pores is short, there is a risk that the energy may be discharged all at once in the event of a meltdown. Therefore, in order to gradually reduce the energy at the time of an abnormality, the shutdown temperature is preferably sufficiently lower than the maximum shrinkage temperature or the meltdown temperature.

Here, the shutdown temperature can be expressed as the temperature (shutdown starting temperature) at the inflection point of a sample length observed around the melting point in TMA measurement. If the microporous membrane does not have such an inflection point, shutdown and shrinkage progress simultaneously as the temperature increases, which makes it difficult to sufficiently suppress reactions at the time of an abnormality and makes it difficult to realize the desired shutdown characteristics. Therefore, from the perspective of safety, a microporous membrane for a separator preferably has such an inflection point. In addition, from the perspective of enhancing shutdown characteristics, the temperature difference (maximum temperature difference) between the shutdown starting temperature in the MD and the maximum shrinkage temperature in the MD is preferably large. Further, the temperature difference between the shutdown starting temperature in the TD (transverse direction) and the maximum shrinkage temperature in the TD is likewise preferably large.

In addition, the suppression of the generation and growth of dendrites is also a crucial issue with regard to preventing shorting in non-aqueous electrolyte secondary batteries. In particular, if the pore size of a separator is large, dendrites tend to grow easily, which may lead to shorting. Therefore, the pore size of the separator is preferably small from the perspective of safety.

Polyolefin microporous membranes such as polyethylene (also called "PE" hereafter) or polypropylene (also called "PP" hereafter) microporous films are currently used as separators for non-aqueous electrolyte secondary batteries from the perspective of high chemical resistance, ease of forming, and shutdown functionality, and such membranes fulfill a role as a safety valve when a battery operates abnormally. From the perspective of shutdown, PE, which has a low melting point, is advantageous, but PP is advantageous from the perspective of maintaining a membrane state at high temperatures. Therefore, methods such as laminating PE and PP or blending PE and PP have been attempted as methods for obtaining a separator having a low shutdown temperature and a high meltdown temperature.

For example, a microporous membrane which has a large difference in shutdown temperature and membrane puncture temperature as well as excellent safety by laminating a microporous membrane A containing a polyethylene and a polypropylene as essential components and a polyethylene microporous membrane B is described in Patent Document 1. However, the shutdown temperature is high at 134°C, and sufficient shutdown characteristics are not achieved.

In contrast, there is also a method of increasing the maximum temperature difference described above by suppressing the anisotropy of the microporous membrane during stretching. A method of melt-kneading a mixture of a polyolefin and a plasticizer, forming the mixture into a sheet shape, stretching the sheet in two axial directions, extracting the plasticizer, and then stretching the sheet in at least one axial direction is described in Patent Document 2. The microporous membrane obtained with the technique described above has small shrinking stress, and a microporous membrane that is difficult to puncture is obtained. However, the average pore size is large, and good safety is not achieved.

A technique of producing a microporous membrane by sequential stretching is described in Patent Document 3. In the microporous membrane obtained in Patent Document 3, the puncture temperature in case of the separator being subjected to a high temperature is high, and the microporous membrane has good thermal shrinking characteristics. However, the melting point is high and the shutdown temperature is high as a result of the polymer being oriented to a high degree. In addition, because the pore size is large, the microporous membrane is prone to dendrite generation.

Patent Document 4 describes the production of a microporous membrane in which anisotropy is controlled by performing simultaneous biaxial stretching at different ratios on a sheet formed by forming a mixture of a polyolefin, a plasticizer, and an inorganic powder into a sheet shape, and a microporous membrane having good thermal shrinkage and strength. In the microporous membrane obtained in Patent Document 4, the separator may be difficult to puncture at a high temperature because the microporous membrane has good thermal shrinkage characteristics and strength, but the pore size is large. Thus, the microporous membrane is prone to dendrite generation.

A microporous membrane having excellent pore blocking, excellent high-temperature pin puncture strength at around the blocking temperature, and excellent membrane puncture resistance is described in Patent Document 5. However, the pore blocking temperature is high at 140°C, and the time to membrane puncture is short at 2 minutes, so sufficient safety is not achieved.

Patent document 6 presents a production method for a polyolefin microporous membrane with focus on balance between rigidity in the longitudinal direction, heat shrinkage properties and air permeability. However, reduction of pore size of the membrane which enhancing the shutdown characteristics is not disclosed.

As described above, although microporous membranes obtained by conventional stretching techniques have enhanced anisotropic control and a large shrinkage temperature difference, the pore size tends to be large, and it is difficult to achieve both the enhancement of shutdown characteristics and the reduction of pore size.

### CITATION LIST

### Patent Literature

Patent Document 1: Japanese Unexamined Patent Application Publication No. 2011-063025A
Patent Document 2: Japanese Unexamined Patent Application Publication No. 2001-081221A
Patent Document 3: Japanese Unexamined Patent Application Publication No. 2009-108323A
Patent Document 4: Japanese Unexamined Patent Application Publication No. 2010-007053A
Patent Document 5: Japanese Unexamined Patent Application Publication No. H11-302436A
Patent Document 6: Pending American Patent Application No. US 2014/159271 A1

### SUMMARY OF INVENTION

### Technical Problem

As described above, in order to enhance the safety of a separator, it is preferable to use a microporous membrane which has excellent shutdown characteristics and a small pore size. However, in conventional techniques such as blending or laminating a PE and a PP or adding a low-melting-point PE, it is difficult to satisfy all of the conditions required of a battery separator. In light of such circumstances, there is a demand not only for improvement of microporous membrane composition, but also for improvement of a production method for a microporous membrane, development of a stretching method in particular, which would enable production of a microporous membrane having excellent shutdown characteristics.

In order to increase the difference between the shutdown starting temperature and the maximum shrinkage temperature by means of stretching so as to enhance the shutdown characteristics, it is necessary to control the anisotropy of the microporous membrane during stretching. However, because the control of anisotropy is difficult with conventional simultaneous biaxial stretching, it is difficult to make the maximum temperature difference large.

Known methods of controlling anisotropy include dry secondary stretching after simultaneous biaxial stretching, simultaneous stretching at different magnifications, and sequential stretching. Although the use of these methods enables the control of anisotropy and makes the maximum temperature difference large, the resulting microporous membrane tends to have a large pore size.

Therefore, a problem to be solved by the present invention is to realize an increase in maximum temperature difference and a reduction in pore size, which were conventionally difficult to achieve simultaneously, and to thereby provide a polyolefin microporous membrane which has excellent safety and is suitable as a battery separator.

### SOLUTION TO PROBLEM

In order to solve the problem described above, the present invention provides a polyolefin microporous membrane, a production method for a polyolefin microporous membrane, a separator for a non-aqueous electrolyte secondary battery, and a non-aqueous electrolyte secondary battery as described in the following (1) to (6).
(1) A polyolefin microporous membrane having, a temperature difference not less than 8.6°C between a shutdown starting temperature and a maximum shrinkage temperature, and a maximum pore size smaller than 0.036 µm, wherein a tensile strength is from 1500 to 4500 kgf/cm²; a content of a polyolefin having a weight average molecular weight of not greater than 5.0 × 10⁵ is not greater than 63 wt.%, and a content of polyolefins having a weight average molecular weight of not less than 1.0 × 10⁶ is not less than 21 wt.%, whereby the shrinkage ratio of the thermal shrinkage in the MD to the thermal shrinkage in the TD when held for 8 hours at 105°C is less than 0.9.
(2) The polyolefin microporous membrane according to (1), wherein an added amount of an ultrahigh molecular weight polyolefin having a weight average molecular weight of not less than 2000000 and not greater than 4000000 is from 25 to 40 wt.%.
(3) A polyolefin microporous membrane, a difference between a shutdown starting temperature in an MD and a maximum shrinkage temperature in the MD is not less than 8.6°C.
(4) A production method for the polyolefin microporous membrane described in any one of (1) to (3), the method including:
   (a) melt-kneading a polyolefin resin containing an ultrahigh molecular weight polyolefin having a weight average molecular weight of not less than 2000000 and not greater than 4000000 and a plasticizer;
   (b) extruding the mixture obtained in step (a) and forming the mixture into a sheet shape;
   (c) stretching the sheet obtained in step (b) in an MD at a stretching magnification of from 1.3 to 2.0 times and then performing simultaneous biaxial stretching on the sheet in the MD and the TD at an area magnification of not less than 25 times and a temperature of from 110 to 120°C; and
   (d) extracting the plasticizer from the stretched film obtained in step (c) and drying the film.
(5) A separator for a non-aqueous electrolyte secondary battery produced using the polyolefin microporous membrane described in any one of (1) to (3).
(6) A non-aqueous electrolyte secondary battery including the separator for a non-aqueous electrolyte secondary battery described in (5).

### Advantageous Effects of Invention

With the present invention, it is possible to obtain a polyolefin microporous membrane which has a large temperature difference between the shutdown starting temperature and the maximum shrinkage temperature, has a small pore size, and is suitable for use as a separator for a non-aqueous electrolyte secondary battery. A separator for a non-aqueous electrolyte secondary battery produced using such a microporous membrane is not only capable of appropriately shutting down battery reactions in the event of an abnormality, but is also capable of suppressing dendrite generation and growth, so the separator for a non-aqueous electrolyte secondary battery has outstanding safety.

In addition, combination of a high-density polyolefin and an ultrahigh molecular weight polyolefin in well-balanced manner enables the control of anisotropy and increases the maximum temperature difference of the microporous membrane. In particular, adjusting the added amount of an ultrahigh molecular weight having a weight average molecular weight of not less than 2000000 and not greater than 4000000 to within a prescribed range can achieve both high strength and excellent shutdown characteristics.

In addition, with a conventional production method for a microporous membrane, if the stretching magnification in the MD or the TD is increased so as to increase the maximum shrinkage temperature in the MD or the TD, the pore size tends to become large, which makes it difficult to achieve both the enhancement of shutdown characteristics and a reduction in pore size simultaneously. According to an embodiment of the present invention, by drying the microporous membrane after performing uniaxial stretching in the MD or the TD and then simultaneous biaxial stretching, it is possible to impart further anisotropy to the microporous membrane while suppressing increases in pore size, which makes it possible to obtain a separator for a non-aqueous electrolyte secondary battery having excellent strength and safety.

As described above, according to an embodiment of the present invention, it is possible to obtain a separator for a non-aqueous electrolyte secondary battery which has excellent shutdown characteristics and is resistant to dendrite generation. As a result, it is possible to obtain a battery which has higher performance and better safety than conventional batteries.

### BRIEF DESCRIPTION OF DRAWINGS

FIG. 1 is a schematic diagram for illustrating a typical result of a measurement by TMA (thermomechanical analyzer).
FIG. 2 illustrates a polyolefin molecular weight distribution curve. FIG. 2A is a schematic diagram for giving an overview of the molecular weight distribution curve, and FIG. 2B is a schematic diagram for explaining that the polyolefin molecular weight distribution curve changes depending on the amount of the polyolefin that is added.

### Description of Embodiments

Preferred embodiments of the present invention will be described hereinafter with reference to the drawings.

One feature of the polyolefin microporous membrane according to an embodiment of the present invention is that the temperature difference between the shutdown starting temperature in the MD or the TD and the maximum shrinkage temperature in the MD or the TD (also simply called the "maximum temperature difference" hereafter) is large. As described above, because separators are wound in a state under tension applied in the MD (machine direction), the meltdown temperature or the maximum shrinkage temperature in the MD is preferably higher from the perspective of preventing membrane puncture and shorting. On the other hand, in order to gradually reduce energy in the event of an abnormality, it is preferable for the temperature difference between the shutdown starting temperature and the maximum shrinkage temperature or the temperature difference between the shutdown starting temperature and the meltdown temperature to be large.

In order to make the difference between the shutdown starting temperature and the maximum shrinkage temperature large, a method such as PP, LLDPE, or lamination is used in conventional techniques, but these methods have disadvantages such as insufficient strength or incomplete shutdown. In contrast, the present invention also provides a method for forming a microporous membrane suitable for a battery separator using a single PE layer. With this method, it is possible to obtain an excellent microporous membrane which is able to suppress incomplete shutdown while maintaining strength comparable to that of a conventional separator. Furthermore, such a microporous membrane has a large temperature difference between the shutdown starting temperature and the maximum shrinkage temperature. However, this method is merely one example, and the present invention is not limited to this example.

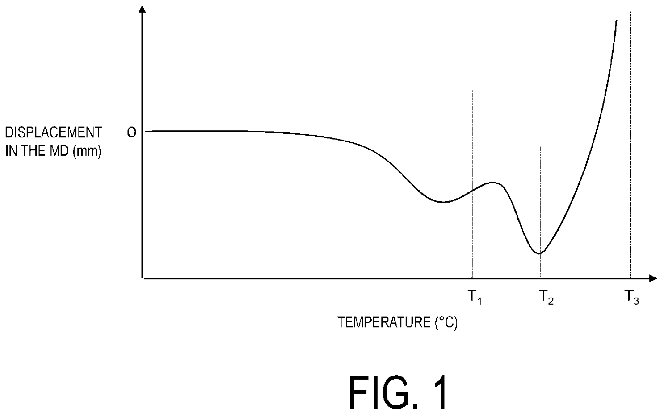

Another feature of the polyolefin microporous membrane of the present invention is that the difference between the shutdown starting temperature in the MD or the TD and the maximum shrinkage temperature in the MD or the TD is not less than 8.6°C. The shutdown starting temperature and the maximum shrinkage temperature can be measured using TMA (thermomechanical analyzer). FIG. 1 illustrates a schematic diagram of a result of a measurement by TMA. The maximum shrinkage temperature in the MD indicates the temperature at which the length of a sample is smallest when temperature-induced changes in the length of the sample in the MD are measured using TMA, which refers to T₂ in FIG. 1. In addition, the shutdown starting temperature in the MD refers to a temperature at which the shrinkage rate in the MD (first derivative of the length in the MD with respect to temperature) has a maximum at around the melting point. In other words, this indicates the temperature at the inflection point of the length in the MD, which refers to T₁ in FIG. 1. If this temperature difference is small (that is, if the value of T₂-T₁ is small), time from the start of shutdown until the complete shutdown becomes short, and the energy generated when the battery operates abnormally cannot be discharged favorably (gradually). This leads to the risk that energy may be discharged all at once when the separator melts down. However, by increasing the temperature difference described above, it is possible to increase the time from the start of shutdown until the complete shutdown, thereby making it possible to enhance the safety of the battery. Note that the difference between the shutdown starting temperature in the MD or the TD and the maximum shrinkage temperature in the MD or the TD is preferably not less than 9.0°C and more preferably not less than 10.0°C. That is, the difference between the shutdown starting temperature in the MD and the maximum shrinkage temperature in the MD or the difference between the shutdown starting temperature in the TD and the maximum shrinkage temperature in the TD is as described above.

From the perspective of enhancing the safety of the battery, the shutdown starting temperature in the MD or the TD is preferably not higher than 133°C and more preferably not higher than 130°C. In addition, the maximum shrinkage temperature in the MD or the TD is preferably not lower than 138°C and more preferably not lower than 140°C.

In the polyolefin microporous membrane according to an embodiment of the present invention, it is crucial for the temperature difference between the shutdown starting temperature in the MD or the TD and the meltdown temperature in the MD or the TD to be not less than 17°C. The temperature difference described above is preferably not less than 18°C and more preferably not less than 19°C. Here, the meltdown temperature is measured with TMA and refers to the temperature at which the microporous membrane punctures when the temperature is increased at a constant heating rate. If the temperature difference between shutdown and meltdown is small, it is disadvantageous from the perspective of suppressing high-temperature runaway when the battery operates abnormally. Therefore, the temperature difference is preferably large. Large temperature difference between shutdown and meltdown can stop the battery reaction in the event that the battery operates abnormally and reaches a high temperature. Thus, shorting between electrodes can be prevented. From the perspective of ensuring the safety of the battery, the meltdown temperature is preferably not lower than 147°C and more preferably not lower than 149°C.

It is crucial for the maximum pore size of the polyolefin microporous membrane to be smaller than 0.036 µm. The maximum pore size of the polyolefin microporous membrane is preferably smaller than 0.035 µm. Keeping the maximum pore size small can suppress dendrite generation and growth, and the risk of membrane puncture due to dendrites. Thus, the safety of the separator can be enhanced. A conventionally known measurement methods such as a porometer may be used in the measurement of the maximum pore size.

The peak top pore size in the measurement of the pore size distribution of the polyolefin microporous membrane is preferably smaller than 0.024 µm and more preferably smaller than 0.022 µm. Keeping the peak top pore size small can suppress dendrite generation and growth. Thus, the safety of the separator can be enhanced. Here, the peak top pore size is the pore size at which the fine pore size distribution curve obtained by measuring the pore size distribution exhibits the maximum peak. In addition, a conventionally known measurement methods such as a porometer may be used in the measurement of the pore size distribution.

Adjustment of the difference between the shutdown temperature and the meltdown temperature, the difference between the shutdown temperature and the maximum shrinkage temperature, and the pore size to within the ranges described above can deter the dendrite growth and suppress the shorting in a battery at a high temperature. Further, the separator gradually shrinks if the battery reaches a high-temperature state and shorts while discharging energy, which yields excellent safety.

From the perspective of preventing membrane puncture due to the electrode active substance or the like, the pin puncture strength at a membrane thickness of 20 µm is typically from 200 to 1000 gf, preferably from 300 to 900 gf, and more preferably from 400 to 800 gf. Here, the pin puncture strength at a membrane thickness of 20 µm refers to the pin puncture strength L₂ calculated by the formula L₂ = (L₁ × 20)/T₁, where L₁ is the pin puncture strength of the microporous membrane at a membrane thickness T₁ (µm).

Note that hereinafter, unless stated specifically with regard to the membrane thickness, the phrase "pin puncture strength" is used to mean the "pin puncture strength at a membrane thickness of 20 µm". In conventional technology, separators having a pin puncture strength of from 300 to 600 gf are used for batteries, but the strength of these separators is not necessarily sufficient. Pin holes or rupturing may occur due the microporous membrane being punctured by a sharp part such as an electrode material, which makes it difficult to reduce the defect rate at the time of battery assembly. By use of the microporous membrane according to an embodiment of the present invention, it is possible to prevent the occurrence of pin holes or rupturing so as to enhance the yield at the time of battery assembly.

In the polyolefin microporous membrane of the present invention, the tensile strength in the MD (tensile elongation at break in the MD; also simply called the "MD tensile strength" hereafter) is preferably not greater than 4500 kgf/cm², more preferably not greater than 3000 kgf/cm² , and even more preferably not greater than 2800 kgf/cm². If the MD tensile strength is not greater than 4500 kgf/cm², it is possible to suppress extreme orientation in the MD. If the MD tensile strength is small, there is a risk of membrane puncture in the battery winding step. And the difference between the shutdown starting temperature and the maximum shrinkage temperature can be increased by enhancing the MD tensile strength. Therefore, the lower limit of the MD tensile strength is preferably not less than 1500 kgf/cm² and more preferably not less than 1700 kgf/cm². Therefore, the tensile strength in the MD is preferably in the range of from 1500 kgf/cm² to 4500 kgf/cm² and more preferably within the range of from 1700 kgf/cm² to 3000 kgf/cm².

The strength ratio S_{MD}/S_{TD} of the tensile strength S_{MD} in the MD to the tensile strength S_{TD} in the TD (MD tensile strength/TD tensile strength) is preferably not less than 1.2 and more preferably not less than 1.5. If the strength ratio is not less than 1.5, orientation in the MD becomes pronounced, and the difference between the shutdown starting temperature and the maximum shrinkage temperature can be made large, which yields a microporous membrane having better safety.

In the polyolefin microporous membrane according to an embodiment of the present invention, the air permeation resistance refers to a value measured in accordance with JIS P 8117 (2009). Note that in this specification, unless stated specifically with regard to the membrane thickness, the phrase "air permeation resistance" is used to mean the "air permeation resistance at a membrane thickness of 20 µm". The air permeation resistance at a membrane thickness of 20 µm is the air permeation resistance P₂ calculated by the formula P₂ = (P₁ × 20)/T₁, where P₁ is the air permeation resistance measured. The air permeation resistance is preferably not greater than 1000 sec/100 cc, more preferably not greater than 800 sec/100 cc, and even more preferably not greater than 500 sec/100 cc. If the air permeation resistance is not greater than 1000 sec/100 cc, good ion permeability is achieved, and it is possible to reduce electrical resistance. On the other hand, if the air permeation resistance is less than 100 sec/100 cc, there is a risk that shutdown prior to meltdown may be insufficient when the internal temperature of the battery increases. Therefore, the air permeation resistance is preferably from 100 sec/100 cc to 1000 sec/100 cc, more preferably from 100 sec/100 cc to 800 sec/100 cc, and even more preferably from 100 sec/100 cc to 500 sec/100 cc.

From the perspective of membrane strength, the upper limit of the porosity is preferably not greater than 70% and more preferably not greater than 60%. In addition, from the perspectives of permeation performance and electrolyte solution content, the lower limit of the porosity is preferably not less than 20% and more preferably not less than 30%. Therefore, the porosity is preferably from 20% to 70% and more preferably from 30% to 60%. The porosity to within the range described above yields a good balance of permeability, strength, and electrolyte solution content, which eliminates non-uniformity in the battery reaction and suppresses dendrite generation. As a result, good safety, strength, and permeability are achieved.

The thermal shrinkage in the MD or the TD when held for 8 hours at 105°C is preferably not greater than 5.5% and more preferably not greater than 5.0%. If the thermal shrinkage is within the range described above, the separator shrinks moderately in the drying process after the separator is wound around the electrodes. Thus the adhesion between the separator and the electrodes is enhanced, which makes it possible to reduce the defect rate at the time of battery assembly. In addition, keeping the thermal shrinkage in the MD or the TD low can prevent the spread of internal shorting and keep the effects thereof to a minimum, even if abnormal heating occurs locally. Therefore, the thermal shrinkage of the separator is preferably within the range described above from the perspective of safety as well.

The shrinkage ratio of the thermal shrinkage in the MD to the thermal shrinkage in the TD (thermal shrinkage in the MD/thermal shrinkage in the TD) when held for 8 hours at 105°C is preferably less than 0.9 and more preferably less than 0.7. By making the shrinkage ratio low, the microporous membrane is less likely to shrink in the MD, so the difference between the shutdown starting temperature and the maximum shrinkage temperature can be made large, which yields a microporous membrane having better safety.

For the material of the microporous membrane, the content of polyethylene components having a molecular weight of not greater than 500000 is preferably not greater than 63 wt.%, and the content of polyethylene components having a molecular weight of not less than 1000000 is preferably not less than 21 wt.% when the entire polyolefin content in the microporous membrane is defined as 100 wt.%. The polyolefin composition ratio within the range described above can increase the meltdown temperature or the maximum shrinkage temperature without increasing the shutdown starting temperature, and the strength of the microporous membrane can also be enhanced further.

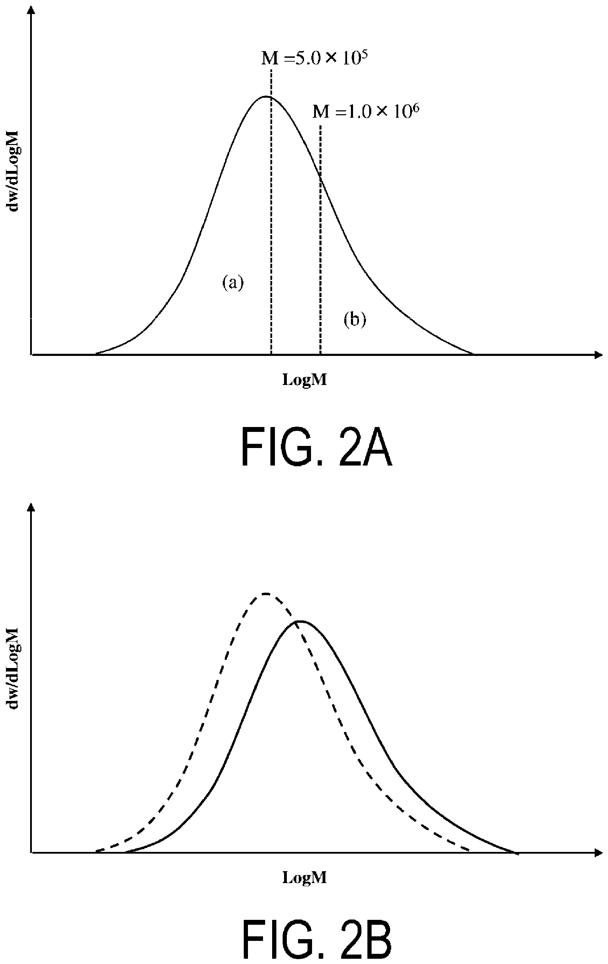

The molecular weight of a polyolefin can be measured by GPC (gel permeation chromatography) analysis technique. FIGS. 2A and 2B both illustrate schematic diagrams of polyolefin molecular weight distribution curves obtained by GPC. The horizontal axis is a logarithmic value of the molecular weight, and the vertical axis is a value obtained by differentiating the concentration ratio of polyolefins with respect to the logarithmic value of the molecular weight. In FIG. 2A, the region of (a) (region enclosed by the molecular weight distribution curve, the dashed line extending toward the horizontal axis from beneath the text "M = 5.0 × 10⁵", and the horizontal axis) corresponds to "polyolefin components having a molecular weight of not greater than 500000", and the region of (b) (region enclosed by the molecular weight distribution curve, the dashed line extending toward the horizontal axis from beneath the text "M = 1.0 × 10⁶" and the horizontal axis) corresponds to "polyolefin components having a molecular weight of not less than 1000000".

The content of polyolefin components having a molecular weight of not greater than 500000 is preferably not greater than 63 wt.% when the entire polyolefin content is defined as 100 wt.%. If the content of polyolefin components having a molecular weight of not greater than 500000 is greater than 63 wt.%, not only the shutdown starting temperature, but also the meltdown temperature and the maximum shrinkage temperature decrease, and it also becomes difficult to ensure the strength of the microporous membrane.

On the other hand, the content of polyolefins having a molecular weight of not less than 1000000 is preferably not less than 21 wt.% and more preferably not less than 25 wt.% when the entire polyolefin content is defined as 100 wt.%. Setting the content of polyolefins having a molecular weight of not less than 1000000 to not less than 21 wt.%, excellent strength is achieved, and it is possible to prevent decrease in the meltdown temperature or the maximum shrinkage temperature due to the addition of low-molecular-weight polyolefins. Thus, a high level of strength and safety can be achieved.

When producing a polyolefin microporous membrane, it is typical to use a plurality of polyolefins of different polymerization components or weight average molecular weights, and the characteristics of the microporous membrane can be enhanced by adjusting the added amount of each polyolefin. FIG. 2B illustrates changes in the polyolefin molecular weight distribution curve due to such an adjustment of the added amounts. The graph represented by the dashed line in FIG. 2B represents the molecular weight distribution curve of a polyolefin of a certain weight average molecular weight. In contrast, the graph represented by the solid line represents the molecular weight distribution curve when an ultrahigh molecular weight polyolefin having a large weight average molecular weight is added (for example, 30 wt.%) to the polyolefin (for example, 70 wt.%). As can be seen in the graph, the polyolefin molecular weight distribution can be controlled by adjusting the added amounts. Therefore, in the present invention, the added amount of an ultrahigh molecular weight polyolefin having a weight average molecular weight of from 2.0 × 10⁶ to 4.0 × 10⁶ is preferably from 25 to 40 wt.% with respect to the entire polyolefin content. Setting the added amount of the ultrahigh molecular weight polyolefin to not less than 25 wt.% can achieve excellent strength and prevent a decrease in the meltdown temperature or the maximum shrinkage temperature caused by the addition of a low-molecular-weight polyolefin. Thus, a high level of both strength and safety can be achieved. In addition, setting the added amount of the ultrahigh molecular weight polyolefin to not greater than 40 wt.% can prevent a decrease in fluidity at the time of extrusion molding or a decrease in drawing property at the time of membrane production.

If an ultrahigh molecular weight polyolefin having a weight average molecular weight of from 2.0 × 10⁶ to 4.0 × 10⁶ is used as described above, the molecular weight distribution of the ultrahigh molecular weight polyolefin (ratio of the weight average molecular weight Mw to the number average molecular weight Mn; that is, Mw/Mn) is preferably within the range of from 3 to 20. If the molecular weight distribution is too narrow, the amount of high-molecular-weight components becomes large, and the fluidity at the time of extrusion molding is diminished. In addition, if the molecular weight distribution is too narrow, there is also a risk that a decrease in drawing property at the time of membrane production may lead to membrane puncture. On the other hand, if the molecular weight distribution is too large, there is a risk that the proportion of low-molecular-weight components will increase and make it difficult to ensure strength.

A polyethylene is preferably used as a material of the microporous membrane, and a polyethylene having a weight average molecular weight of from 5.0 × 10⁵ to 9.0 × 10⁵ (high-density polyethylene; also simply called an "HDPE" hereafter) and a polyethylene having a weight average molecular weight of from 2.0 × 10⁶ to 4.0 × 10⁶ (ultrahigh molecular weight polyethylene; also simply called an "UHMWPE" hereafter) are particularly preferably used. In conventional technology, in order to increase the difference between the shutdown starting temperature and the meltdown temperature, a method of adding a resin such as polypropylene (PP) or linear low-density polyethylene (LLDPE), a method of establishing a laminated structure in the microporous membrane, or the like has been used. However, with these methods, non-uniformities in physical properties tend to arise due to a decrease in uniformity, which leads to a risk of incomplete shutdown or a risk of insufficient strength. In particular, PPs are incompatible with polyethylenes (PEs), and the microporous membrane therefore exhibits a sea-island structure, which makes it difficult to realize the enhancement of shutdown characteristics or strength. In contrast, according to an embodiment of the present invention, using an HDPE and an UHMWP having relatively large molecular weights as main components (preferably, by essentially using only HDPE and UHMWPE as polyolefins) can increase the difference between the shutdown starting temperature and the maximum shrinkage temperature and meltdown temperature while maintaining strength. Therefore, it is possible to enhance strength or shutdown characteristics, which was difficult with conventional polyethylene microporous membranes, and it is thus possible to provide a separator for a non-aqueous electrolyte secondary battery having outstanding safety. The HDPE content is preferably not greater than 63 wt.% when the entire polyolefin content constituting the microporous membrane is defined as 100 wt.%. In addition, the UHMWPE content is preferably not less than 21 wt.% when the entire polyolefin content constituting the microporous membrane is defined as 100 wt.%.

As described above, if a composition of an HDPE and an UHMWPE is used, the molecular weight distribution of the HDPE (ratio of the weight average molecular weight Mw to the number average molecular weight Mn; that is, Mw/Mn) is preferably within the range of from 3 to 20, and the molecular weight distribution (Mw/Mn) of the UHMWPE is preferably within the range of from 3 to 20. If the molecular weight distribution is too narrow, the amount of high-molecular-weight components becomes large, and the fluidity at the time of extrusion molding is diminished. In addition, if the molecular weight distribution is too narrow, there is also a risk that a decrease in drawing property at the time of membrane production may lead to membrane puncture. On the other hand, if the molecular weight distribution is too large, there is a risk that the proportion of low-molecular-weight components will increase and make it difficult to ensure strength.

From the perspective of achieving both the enhancement of shutdown characteristics and a reduction in pore size, the production method of the polyolefin microporous membrane described above preferably includes the following steps (a) to (d):
(a) melt-kneading a polyolefin resin containing an ultrahigh molecular weight polyolefin having a weight average molecular weight of not less than 2000000 and not greater than 4000000 and a plasticizer;
(b) extruding the mixture obtained in step (a) and forming the mixture into a sheet shape;
(c) stretching the sheet obtained in step (b) in an MD at a stretching magnification of from 1.3 to 2.0 times and then performing simultaneous biaxial stretching on the sheet in the MD and the TD at an area magnification of not less than 25 times and a temperature of from 110 to 120°C; and
(d) extracting the plasticizer from the stretched film obtained in step (c) and drying the film.

Implementation of the steps of (a) to (d) during the production of a microporous membrane can provide a microporous membrane which is suitable for use as a separator for a non-aqueous electrolyte secondary battery. First, addition of an appropriate amount of an ultrahigh molecular weight polyolefin can enhance the tensile strength of the microporous membrane without reducing the formability of the microporous membrane. Thus, an increase in the maximum shrinkage temperature and the meltdown temperature can be achieved. In addition, performing stretching in the MD at a low magnification prior to simultaneous biaxial stretching enables control of the anisotropy of the microporous membrane to enhance the tensile strength in the MD or the TD. Thus, the maximum shrinkage temperature in the MD or the TD can be increased. Further, by performing stretching in the MD, simultaneous biaxial stretching in the MD and the TD, and drying the stretched sheet in this order, an increase in the maximum temperature difference and a reduction in pore size, which were conventionally difficult to achieve simultaneously, can be achieved. Thus, a separator for a non-aqueous electrolyte secondary battery which has excellent shutdown characteristics, is resistant to dendrite generation, and has outstanding safety, can be obtained. That is, performing uniaxial stretching prior to simultaneous biaxial stretching can enhance the tensile strength and the maximum shrinkage temperature in the direction in which this uniaxial stretching is performed.

In the stretching in the MD and the simultaneous biaxial stretching in step (c) described above, the stretching temperature is preferably not lower than 110°C and not higher than 120°C, more preferably not lower than 110°C and lower than 120°C, and particularly preferably not lower than 110°C and not higher than 115°C. If the stretching temperature is too low, the microporous membrane may not have a primary inflection point, and good shutdown characteristics may not be achieved. In addition, if the stretching temperature is too high, there is a risk that the tensile strength in the MD or the TD may decrease and that the maximum shrinkage temperature in the MD or the TD may decrease.

In the stretching in the MD or the stretching in the TD in step (c) described above, the stretching magnification is preferably from 1.3 to 2.0 times and more preferably from 1.4 to 2.0 times. If the stretching magnification in step (c) is too low, there is a risk that the tensile strength in the direction in which this stretching is performed may decrease and that the maximum shrinkage temperature in this temperature may decrease. In addition, if the stretching magnification in step (c) is too high, there is a risk that the balance between the MD tensile strength and the TD tensile strength will become poor and that wrinkling or winding deviation may occur.

According to an embodiment of the present invention. a separator for a non-aqueous electrolyte secondary battery produced using the polyolefin microporous membrane described above and a non-aqueous electrolyte secondary battery produced using the separator for a non-aqueous electrolyte secondary battery are also provided. By use of a polyolefin microporous membrane that has the large temperature difference between the shutdown starting temperature in the MD or the TD and the maximum shrinkage temperature in the MD or the TD and the small pore size, it is possible to obtain a separator for a non-aqueous electrolyte secondary battery which has excellent shutdown characteristics and is resistant to dendrite generation. Thus, a non-aqueous electrolyte secondary battery having extremely high safety can be provided.

### Examples

Specific examples of the present invention will be described hereinafter using examples, but the present invention is not limited to these examples.

### Measurement methods

### 1. Polyolefin molecular weight distribution measurement

Molecular weight distribution measurements (measurements of the weight average molecular weight, the molecular weight distribution, the content of prescribed components, and the like) of the polyolefins were performed by high-temperature GPC. The measurement conditions were as follows.
Instrument: high-temperature GPC (Product No. HT-GPC, manufactured by Polymer Laboratories, PL-220)
Detector: differential refractometer RI
Guard column: Shodex G-HT
Columns: Shodex HT806M (two columns)
(ϕ: 7.8 mm x 30 cm, manufactured by Showa Denko Co., Ltd.)
Solvent: 1,2,4-trichlorobenzene (TCB, manufactured by Wako Pure Chemical Industries Co., Ltd.) (containing 0.1% BHT)
Flow rate: 1.0 mL/min
Column temperature: 145°C
Sample preparation: First, 5 mL of a measurement solvent was added to 5 mg of a sample, and after the mixture was stirred while heating for 30 minutes at 160 to 170°C, the resulting solution was filtered with a metal filter (pore size: 0.5 µm).
Injection volume: 0.200 mL
Standard sample: monodisperse polystyrene (manufactured by Toso Co., Ltd.)
Data processing: GPC data processing system by TRC

### 2. Membrane thickness

The thickness of the microporous membrane was measured at a randomly selected MD position using a contact thickness meter. At the MD position, measurements were performed at intervals of 5 mm over a distance of 30 cm at points along the TD (width direction) of the membrane. Measurements along the TD were performed five times, and the arithmetic mean was used as the thickness of the sample.

### 3. Air permeation resistance

The air permeation resistance P₁ was measured for a microporous membrane having a membrane thickness T₁ using an air permeability meter (EGO-1T manufactured by Asahi Seiko Co., Ltd.), and the air permeation resistance P₂ at a membrane thickness of 20 µm was calculated from the formula P₂ = (P₁ × 20)/T₁.

### 4. Pin puncture strength

A needle 1 mm in diameter having a spherical surface (radius of curvature R: 0.5 mm) at the tip was used to puncture a microporous membrane having an average membrane thickness T₁ (µm) at a rate of 2 mm/sec, and the maximum load L₁ (load immediately prior to penetration, units: gf) was measured. The pin puncture strength L₂ (gf/20 µm) at a membrane thickness of 20 µm was calculated from the formula L₂ = (L₁ × 20)/T₁.

### 5. Porosity

The porosity was calculated from the following formula using the mass w1 of the microporous membrane and the mass w2 of a membrane of the same size with no pores made of the same polyolefin composition as the microporous membrane: porosity (%) = (w2 - wl)/w2 × 100.

### 6. Thermal shrinkage

The shrinkage in the MD when the microporous membrane was held for 8 hours at 105°C was measured three times, and the average was used as the thermal shrinkage in the MD. In addition, similar measurements were taken in the TD to determine the thermal shrinkage in the TD.

### 7. Tensile strength

The MD tensile strength and the TD tensile strength were measured with the method according to ASTM D882 using a strip sample with a width of 10 mm.

### 8. Maximum shrinkage temperature, shutdown starting temperature, and meltdown temperature

A test piece 10 mm long (MD) and 3 mm wide (TD), which was under a constant load (2 gf) in the MD, was heated from room temperature at a rate of 5°C/min using a thermomechanical analyzer (TMA/SS6600 manufactured by Seiko Electronic Industries Co., Ltd.), and the temperature at the inflection point of the sample length observed at around the melting point was recorded as the shutdown shrinkage temperature in the MD, while the temperature at which the sample length was smallest was recorded as the maximum shrinkage temperature in the MD (see FIG. 1). In addition, the temperature at which the membrane was punctured due to melting was recorded as the meltdown temperature in the MD.

### 9. Maximum pore size and peak top pore size

The maximum pore size and the peak top pore size of the microporous membrane were calculated as follows. First, the relationship between air pressure and air flow rate was measured for a sample in a dry state and a sample in a wet state prepared by filling the fine pores with a measurement solution, and a permeation curve (dry curve) for the dry sample and a permeation curve (wet curve) for the wet sample were obtained. A pore size distribution curve indicating the relationship between pore diameter and pore size distribution was then determined based on pressure-induced changes in the air flow rate in the dry state and the wet state, and the maximum value of the pore size was recorded as the maximum pore size. In addition, the pore size at which the obtained pore size distribution curve indicates the maximum peak was recorded as the peak top pore size. The measurement conditions were as follows.
Instrument: Perm Porometer (CFP-1500) manufactured by PMI
Measurement solution: Galwick (manufactured by PMI)
Measurement pressure: 0 to 3500 MPa

### 10. Battery drop tests

A cylindrical battery was produced in accordance with the following procedure, and battery drop tests were performed.

### Production of a cathode

A slurry was prepared by dispersing 92.2 mass% of a lithium cobalt composite oxide (LiCoO₂) as an active substance, 2.3 mass% each of scaly graphite and acetylene black as conductive agents, and 3.2 mass% of polyvinylidene fluoride (PVDF) as a binder in N-methylpyrrolidone (NMP). This slurry was applied at an active material coating volume of 250 g/m² and an active material bulk density of 3.00 g/cm³ with a die coater to one side of a piece of aluminum foil with a thickness of 20 µm to serve as a cathode current collector. This was then dried for three minutes at 130°C, and after the sample was pressure-molded with a roll pressing machine, the sample was cut to a width of approximately 57 mm to form a strip shape.

### Production of an anode

A slurry was prepared by dispersing 96.9 mass% of artificial graphite as an active substance, 1.4 mass% of an ammonium salt of carboxymethylcellulose as a binder, and 1.7 mass% of a styrene-butadiene copolymer latex in purified water. This slurry was applied to one side of a piece of copper foil with a thickness of 12 µm to serve as an anode current collector using a die coater at a high filling density with an active material coating volume of 106 g/m² and an active material bulk density of 1.55 g/cm³. This was then dried for three minutes at 120°C, and after the sample was pressure-molded with a roll pressing machine, the sample was cut to a width of approximately 58 mm to form a strip shape.

### Preparation of non-aqueous electrolytic solution

A non-aqueous electrolytic solution was prepared by dissolving LiPF₆ as a solute in a mixed solvent of ethylene carbonate/ethyl methyl carbonate (volume ratio of 1/2) so that the concentration was 1.0 mol/L.

### Separator

The separators described in the examples and the comparative examples were slit into 60 mm strips.

### Battery assembly

A strip-shaped anode, a separator, a strip-shaped cathode, and another separator were superimposed in this order and then wound a plurality of times into a coil shape with a winding tension of 250 gf to produce an electrode plate laminate. This electrode plate laminate was housed in a stainless steel container with an outside diameter of 18 mm and a height of 65 mm. An aluminum tab derived from the positive current collector was welded to the terminal part of the container lid, and a nickel tab derived from the anode current collector was welded to the container wall. Drying was then performed in a vacuum for 12 hours at 80°C, and the non-aqueous electrolytic solution described above was injected into the container in an argon box and sealed.

### Pretreatment

After the assembled battery was charged at a constant current with a current value of 1/3 C up to a voltage of 4.2 V, the battery was charged for five hours at a constant voltage of 4.2 V and then discharged at a current of 1/3 C until a final voltage of 3.0 V was reached. Next, after the battery was charged at a constant current with a current value of 1 C up to a voltage of 4.2 V, the battery was charged for two hours at a constant voltage of 4.2 V and then discharged at a current of 1 C until a final voltage of 3.0 V was reached. Finally, after the battery was charged at a constant current with a current value of 1 C up to 4.2 V, the battery was charged for two hours at a constant voltage of 4.2 as a form of pretreatment.

### Drop tests

After three batteries were prepared using the method described above, drop tests were performed on each battery, and the impact resistance (safety) was evaluated based on the number of shorted batteries. First, each prepared battery was heated for 1 hour at 105°C, and after the battery was allowed to free-fall from a height of 2 m, the battery was left for 10 minutes. The terminal voltage was then measured, and cases in which the terminal voltage was less than 90% of the terminal voltage prior to the test were assessed as being in the "shorted state". The measurement results were then tabulated, and a smaller number of shorted batteries was evaluated as an indication of better impact resistance. The evaluation criteria are as follows.
Cases in which the number of shorted batteries was 0 of 3 batteries: E (excellent)
Cases in which 1 out of 3 batteries shorted: F (fair)
Cases in which 2 or more out of 3 batteries shorted: X (poor)

### Example 1

A polyethylene composition consisting of 30 wt.% of a PE 1 (ultrahigh molecular weight polyethylene, weight average molecular weight (Mw): 2.89 × 10⁶, molecular weight distribution (Mw/Mn): 5.28) as an ultrahigh molecular weight polyethylene and 70 wt.% of a PE2 (high-density polyolefin, weight average molecular weight: 5.72 × 10⁵, molecular weight distribution: 4.81) as a high-density polyolefin was prepared. When the entire amount of this polyethylene composition was defined as 100 wt.%, the content of polyethylene components having a molecular weight of not greater than 500000 was 59 wt.%, and the content of polyethylene components having a molecular weight of not less than 1000000 was 26 wt.%. Next, 71.5 wt.% of liquid paraffin was added to 28.5 wt.% of this polyethylene composition, and 0.5 mass% of 2,6-di-t-butyl-p-cresol and 0.7 mass% of tetrakis[methylene-3-(3,5-di-t-butyl-4-hydroxylphenyl)-propionate]methane were added as antioxidants on the basis of the mass of the polyethylenes in the mixture to prepare a polyethylene resin solution. After this polyethylene resin solution was supplied to a T-die from a twin-screw extruder and extruded into a sheet shape with a thickness of approximately 1.0 mm, the extrudate was cooled with a cooling roll controlled to 25°C to form a gel-like sheet. After a sample for batch tests was prepared by cutting out such a gel-sheet into a given size, an MD stretching step of stretching the sample for batch tests in the MD at a stretching magnification of 1.3 times using a batch-type stretching machine while subjecting the sample to a temperature of 115°C. Next, a simultaneous biaxial stretching step was performed, whereby simultaneous biaxial stretching was performed at a magnification of 5 × 5 in both the MD and the TD while subjecting the sample to a temperature of 115°C after the completion of the MD stretching step. The stretched sheet (that is, the film) was fixed to a 20 cm × 20 cm aluminum frame plate and immersed in a methylene chloride washing bath. After the sheet was washed while oscillating for 10 minutes to remove the liquid paraffin, the washed membrane was air-dried at room temperature. The membrane was then held for 10 minutes at 125°C to produce a polyolefin microporous membrane. The membrane characteristics of the obtained microporous membrane are shown in Tables 1 to 3.

### Example 2

A polyolefin microporous membrane was prepared in the same manner as in Example 1 with the exception that the stretching magnification in the MD stretching step was set to 1.4 times. The membrane characteristics of the obtained microporous membrane are shown in Tables 1 to 3.

### Example 3

A polyolefin microporous membrane was prepared in the same manner as in Example 1 with the exception that the stretching magnification in the MD stretching step was set to 1.6 times. The membrane characteristics of the obtained microporous membrane are shown in Tables 1 to 3.

### Example 4

A polyolefin microporous membrane was prepared in the same manner as in Example 1 with the exception that the stretching magnification in the MD stretching step was set to 1.8 times. The membrane characteristics of the obtained microporous membrane are shown in Tables 1 to 3.

### Example 5

A polyolefin microporous membrane was prepared in the same manner as in Example 2 with the exception that the quantity ratio of PE 1 to PE2 was set to 25/75 and that the quantity ratio of the polyethylene composition and the liquid paraffin was set so that the polyethylene composition content was 30.0 wt.% and the liquid paraffin content was 70 wt.%. When the entire polyethylene composition content was defined as 100 wt.%, the content of polyethylene components having a molecular weight of not greater than 500000 was 62 wt.%, and the content of polyethylene components having a molecular weight of not less than 1000000 was 23 wt.%. The membrane characteristics of the obtained microporous membrane are shown in Tables 1 to 3.

### Example 6

A polyolefin microporous membrane was prepared in the same manner as in Example 2 with the exception that the quantity ratio of PE 1 to PE2 was set to 30/70 and that the quantity ratio of the polyethylene composition and the liquid paraffin was set so that the polyethylene composition content was 30.0 wt.% and the liquid paraffin content was 70 wt.%. The membrane characteristics of the obtained microporous membrane are shown in Tables 1 to 3.

### Example 7

A polyolefin microporous membrane was prepared in the same manner as in Example 2 with the exception that the stretching temperature for MD stretching and simultaneous biaxial stretching was set to 110°C. The membrane characteristics of the obtained microporous membrane are shown in Tables 1 to 3.

### Comparative Example 1

A polyolefin microporous membrane was prepared in the same manner as in Example 1 with the exception that an MD stretching step was not performed, and only a simultaneous biaxial stretching step was performed as a stretching step. The membrane characteristics of the obtained microporous membrane are shown in Tables 1 to 3.

### Comparative Example 2

A polyolefin microporous membrane was prepared in the same manner as in Comparative Example 1 with the exception that the stretching magnification in the simultaneous biaxial stretching step was set to 6 × 6 times. The membrane characteristics of the obtained microporous membrane are shown in Tables 1 to 3.

### Comparative Example 3

A polyolefin microporous membrane was prepared in the same manner as in Comparative Example 1 with the exception that the stretching magnification in the simultaneous biaxial stretching step was set to 7 × 7 times. The membrane characteristics of the obtained microporous membrane are shown in Tables 1 to 3.

### Comparative Example 4

A polyolefin microporous membrane was prepared in the same manner as in Comparative Example 1 with the exception that the stretching magnification in the simultaneous biaxial stretching step was set to 7 × 5 times. The membrane characteristics of the obtained microporous membrane are shown in Tables 1 to 3.

### Comparative Example 5

A polyolefin microporous membrane was prepared in the same manner as in Example 2 with the exception that the quantity ratio of PE1 to PE2 was set to 10/90, that the polyethylene content was set to 30.0 wt.%, and that the liquid paraffin content was set to 70 wt.%. When the entire polyethylene composition content was defined as 100 wt.%, the content of polyethylene components having a molecular weight of not greater than 500000 was 70 wt.%, and the content of polyethylene components having a molecular weight of not less than 1000000 was 14 wt.%. The membrane characteristics of the obtained microporous membrane are shown in Tables 1 to 3.

### Comparative Example 6

A polyolefin microporous membrane was prepared in the same manner as in Example 1 with the exception that the stretching temperature for MD stretching and simultaneous biaxial stretching was set to 90°C. The membrane characteristics of the obtained microporous membrane are shown in Tables 1 to 3.

### Comparative Example 7

A polyolefin microporous membrane was prepared in the same manner as in Example 1 with the exception that the stretching temperature for MD stretching and simultaneous biaxial stretching was set to 100°C. The membrane characteristics of the obtained microporous membrane are shown in Tables 1 to 3.

### Comparative Example 8

A polyolefin microporous membrane was prepared in the same manner as in Example 1 with the exception that the stretching temperature for MD stretching and simultaneous biaxial stretching was set to 120°C. The membrane characteristics of the obtained microporous membrane are shown in Tables 1 to 3.

**Table 1**

| | Stretching method | Resin | | | | | Stretching magnification of each step | | Total stretching magnification | | | | Stretching temperature | |
|---|---|---|---|---|---|---|---|---|---|---|---|---|---|---|
| | | PE1 (wt.%) | PE2 wt.%) | Amount of components having a molecular weight of not less than 1000000 (%) | Amount of components having a molecular weight of not greater than 500000 (%) | Resin solution concentration (wt.%) | MD stretching | Simultaneous biaxial stretching (MDxTD) | MD total stretching magnification | TD total stretching magnification | MD/TD stretching magnification | Total stretching magnification | MD stretching (°C) | Simultaneous biaxial stretching (°C) |
| Example 1 | PMD | 30 | 70 | 26 | 59 | 28.5 | 1.3 | 5 x 5 | 6.5 | 5 | 1.3 | 32.5 | 115 | 115 |
| Example 2 | PMD | 30 | 70 | 26 | 59 | 28.5 | 1.4 | 5 × 5 | 7 | 5 | 1.4 | 35 | 115 | 115 |
| Example 3 | PMD | 30 | 70 | 26 | 59 | 28.5 | 1.6 | 5 × 5 | 8 | 5 | 1.6 | 40 | 115 | 115 |
| Example 4 | PMD | 30 | 70 | 26 | 59 | 28.5 | 1.8 | 5 × 5 | 9 | 5 | 1.8 | 45 | 115 | 115 |
| Example 5 | PMD | 25 | 75 | 23 | 62 | 30 | 1.4 | 5 × 5 | 7 | 5 | 1.4 | 35 | 115 | 115 |
| Example 6 | PMD | 30 | 70 | 26 | 59 | 30 | 1.4 | 5 × 5 | 7 | 5 | 1.4 | 35 | 115 | 115 |
| Example 7 | PMD | 30 | 70 | 26 | 59 | 28.5 | 1.4 | 5 × 5 | 7 | 5 | 1.4 | 35 | 110 | 110 |
| Comparative Example 1 | Simultaneous | 30 | 70 | 26 | 59 | 28.5 | - | 5 × 5 | 5 | 5 | 1 | 25 | - | 115 |
| Comparative Example 2 | Simultaneous | 30 | 70 | 26 | 59 | 28.5 | - | 6 × 6 | 6 | 6 | 1 | 36 | - | 115 |
| Comparative Example 3 | Simultaneous | 30 | 70 | 26 | 59 | 28.5 | - | 7 × 7 | 7 | 7 | 1 | 49 | - | 115 |
| Comparative Example 4 | Simultaneous | 30 | 70 | 26 | 59 | 28.5 | - | 7 × 5 | 7 | 5 | 1.4 | 35 | - | 115 |
| Comparative Example 5 | PMD | 10 | 90 | 14 | 70 | 30 | 1.4 | 5 × 5 | 7 | 5 | 1.4 | 35 | 115 | 115 |
| Comparative Example 6 | PMD | 30 | 70 | 26 | 59 | 28.5 | 1.4 | 5 × 5 | 7 | 5 | 1.4 | 35 | 90 | 90 |
| Comparative Example 7 | PMD | 30 | 70 | 26 | 59 | 28.5 | 1.4 | 5 × 5 | 7 | 5 | 1.4 | 35 | 100 | 100 |
| Comparative Example 8 | PMD | 30 | 70 | 26 | 59 | 28.5 | 1.4 | 5 × 5 | 7 | 5 | 1.4 | 35 | 120 | 120 |

**Table 2**

| | Porosity (%) | Air permeation resistance @20 µm (sec/100cc) | Pin puncture strength @20 µm (gf) | Shrinkage | | | Tensile test | | |
|---|---|---|---|---|---|---|---|---|---|
| | | | | Shrinkage at 105°C in the MD (%) | Shrinkage at 105°C in the TD (%) | Shrinkage ratio (MD/TD) | MD tensile strength (kgf/cm²) | TD tensile strength (kgf/cm²) | Strength ratio (MD/TD) |
| Example 1 | 35 | 385 | 540 | 4.8 | 7.2 | 0.7 | 1560 | 1260 | 1.2 |
| Example 2 | 43 | 334 | 550 | 4.2 | 6.6 | 0.6 | 1670 | 1250 | 1.3 |
| Example 3 | 44 | 325 | 590 | 4.0 | 9.1 | 0.4 | 1890 | 1230 | 1.5 |
| Example 4 | 42 | 365 | 675 | 5.0 | 14.0 | 0.4 | 2365 | 1250 | 1.9 |
| Example 5 | 45 | 300 | 500 | 4.7 | 5.3 | 0.9 | 1600 | 1200 | 1.3 |
| Example 6 | 44 | 330 | 555 | 5.4 | 8.5 | 0.6 | 1715 | 1310 | 1.3 |
| Example 7 | 43 | 370 | 650 | 3.6 | 11.9 | 0.3 | 2090 | 1260 | 1.3 |
| Comparative Example 1 | 34 | 670 | 510 | 4.0 | 5.2 | 0.8 | 1540 | 1385 | 1.1 |
| Comparative Example 2 | 37 | 515 | 625 | 5.2 | 5.2 | 1.0 | 1645 | 1490 | 1.1 |
| Comparative Example 3 | 41 | 350 | 640 | 6.3 | 6.9 | 0.9 | 1665 | 1610 | 1.0 |
| Comparative Example 4 | 42 | 355 | 615 | 3.8 | 7.8 | 0.5 | 1785 | 1380 | 1.3 |
| Comparative Example 5 | 46 | 250 | 435 | 4.5 | 6.1 | 0.7 | 1360 | 1035 | 1.3 |
| Comparative Example 6 | 24 | 5245 | 840 | 3.2 | 6.9 | 0.5 | 2825 | 1670 | 1.3 |
| Comparative Example 7 | 35 | 790 | 730 | 3.2 | 9.6 | 0.3 | 2470 | 1430 | 1.3 |
| Comparative Example 8 | 37 | 390 | 410 | 4.8 | 4.2 | 1.2 | 1090 | 810 | 1.3 |

**Table 3**

| | TMA | | | | | Pore size | | Battery tests |
|---|---|---|---|---|---|---|---|---|
| | Shutdown starting temperature in the MD T₁ (°C) | Maximum shrinkage temperature in the MD T₂ (°C) | Meltdown temperature in the MD T₃ (°C) | T₂ - T₁ (δ) | T₃ - T₁ (δ) | Peak top pore size (µm) | Maximum pore size (µm) | Battery drop tests |
| Example 1 | 130.5 | 139.5 | 148.0 | 9.0 | 17.5 | 0.022 | 0.035 | F |
| Example 2 | 130.5 | 140.0 | 149.0 | 9.5 | 18.5 | 0.021 | 0.034 | E |
| Example 3 | 130.5 | 141.0 | 149.0 | 10.5 | 18.5 | 0.022 | 0.034 | E |
| Example 4 | 130.0 | 140.5 | 149.0 | 10.5 | 19.0 | 0.023 | 0.035 | E |
| Example 5 | 130.0 | 138.7 | 148.5 | 8.7 | 18.5 | 0.022 | 0.035 | F |
| Example 6 | 129.0 | 139.0 | 149.0 | 10.0 | 20.0 | 0.021 | 0.034 | E |
| Example 7 | 130.0 | 140.0 | 149.5 | 10.0 | 19.5 | 0.020 | 0.033 | E |
| Comparative Example 1 | 131.5 | 140.0 | 148.0 | 8.5 | 16.5 | 0.028 | 0.048 | X |
| Comparative Example 2 | 132.0 | 140.5 | 149.0 | 8.5 | 17.0 | 0.024 | 0.038 | X |
| Comparative Example 3 | 132.5 | 141.0 | 149.0 | 8.5 | 16.5 | 0.022 | 0.036 | X |
| Comparative Example 4 | 129.5 | 139.5 | 149.0 | 10.0 | 19.5 | 0.025 | 0.040 | X |
| Comparative Example 5 | 130.0 | 137.5 | 147.5 | 7.5 | 17.5 | 0.027 | 0.038 | X |
| Comparative Example 6 | - | 138.5 | 149.0 | - | - | - | - | X |
| Comparative Example 7 | - | 139.0 | 149.0 | - | - | 0.019 | 0.034 | X |
| Comparative Example 8 | 130.0 | 138.5 | 147.5 | 8.5 | 17.5 | 0.024 | 0.038 | X |

In the examples described above, the direction in which the membrane is extruded from the T-die and passes through the cooling roll is described as the MD, but because stretching is performed in a batch format, there is no distinction between the MD and the TD. Therefore, the physical properties achieved in the examples may be considered the physical properties in both the MD and the TD achieved by performing the uniaxial stretching in step (c) in the MD or the TD.

That is, the difference between the physical properties (orientation) of the microporous membrane in the MD and the physical properties of the microporous membrane in the TD (described as the "MD/TD physical property difference" hereafter) arises as a result of stretching. Accordingly, in a cast sheet that has been subjected to no stretching whatsoever (gel-like sheet prior stretching after being extruded from the T-die), the MD/TD physical property difference is completely nonexistent or is negligibly small in comparison to the MD/TD physical property difference arising after stretching. Therefore, because a gel-like sheet is cut out for batch tests and then subjected to the steps beginning with uniaxial stretching in the examples, the direction in which this uniaxial stretching is performed may be expressed as the MD or may be expressed as the TD. In other words, in the present invention, the physical properties in the direction of uniaxial stretching performed prior to simultaneous biaxial stretching can be set as described in the Scope of the Patent Claims.

Note that in this application, the expression "A to B" indicating a numerical range is used to mean a range including the lower limit A and the upper limit B - that is, "not less than A and not greater than B".

### Industrial Applicability

The microporous membrane of the present invention is suitable for use as a separator for a non-aqueous electrolyte secondary battery and, in particular, can be suitably used as a separator for a non-aqueous electrolyte secondary battery.

## Claims

1. A polyolefin microporous membrane having:
a temperature difference not less than 8.6°C between a shutdown starting temperature and a maximum shrinkage temperature; and
a maximum pore size smaller than 0.036 µm;
wherein a tensile strength is from 1500 to 4500 kgf/cm²;
a content of a polyolefin having a weight average molecular weight of not greater than 5.0 × 10⁵ is not greater than 63 wt.%; and
a content of polyolefins having a weight average molecular weight of not less than 1.0 × 10⁶ is not less than 21 wt.%,
whereby the shrinkage ratio of the thermal shrinkage in the MD to the thermal shrinkage in the TD when held for 8 hours at 105°C is less than 0.9, wherein the shutdown starting temperature, the maximum shrinkage temperature, the maximum pore size, the tensile strength and the thermal shrinkage are measured according to the description.

2. The polyolefin microporous membrane according to claim 1, wherein an added amount of an ultrahigh molecular weight polyolefin having a weight average molecular weight of not less than 2000000 and not greater than 4000000 is from 25 to 40 wt.%.

3. A polyolefin microporous membrane according to any one of claims 1 or 2, wherein a difference between a shutdown starting temperature in an MD and a maximum shrinkage temperature in the MD is not less than 8.6°C.

4. A production method for the polyolefin microporous membrane described in any one of claims 1 to 3, the method comprising:
(a) melt-kneading a polyolefin resin containing an ultrahigh molecular weight polyolefin having a weight average molecular weight of not less than 2000000 and not greater than 4000000 and a plasticizer;
(b) extruding the mixture obtained in step (a) and forming the mixture into a sheet shape;
(c) stretching the sheet obtained in step (b) in an MD at a stretching magnification of from 1.3 to 2.0 times and then performing simultaneous biaxial stretching on the sheet in the MD and the TD at an area magnification of not less than 25 times and a temperature of from 110 to 120°C; and
(d) extracting the plasticizer from the stretched film obtained in step (c) and drying the film.

5. A separator for a non-aqueous electrolyte secondary battery produced using the polyolefin microporous membrane described in any one of claims 1 to 3.

6. A non-aqueous electrolyte secondary battery comprising the separator for a non-aqueous electrolyte secondary battery described in claim 5.

## Patentansprüche

1. Mikroporöse Polyolefinmembran, die aufweist:
eine Temperaturdifferenz von nicht weniger als 8,6°C zwischen eine Abschaltstarttemperatur und einer maximalen Schrumpfungstemperatur; und
eine maximale Porengröße von weniger als 0,036 µm;
wobei eine Zugfestigkeit von 1500 bis 4500 kgf/cm² beträgt;
ein Gehalt eines Polyolefins mit einem gewichtsmittleren Molekulargewicht von nicht mehr als 5,0 × 10⁵ nicht größer als 63 Gew.-% ist; und
ein Gehalt von Polyolefinen mit einem gewichtsmittleren Molekulargewicht von nicht weniger als 1,0 × 10⁶ nicht kleiner als 21 Gew.-% ist,
wodurch das Schrumpfungsverhältnis der thermischen Schrumpfung in die MD zur thermische Schrumpfung in die TD, wenn sie für 8 Stunden auf 105°C gehalten wird, kleiner als 0,9 ist, wobei die Abschaltstarttemperatur, die maximale Schrumpfungstemperatur, die maximale Porengröße,
die Zugfestigkeit und die thermische Schrumpfung gemäß der Beschreibung gemessen werden.

2. Mikroporöse Polyolefinmembran nach Anspruch 1, wobei eine zugegebene Menge eines Polyolefins mit ultrahohem Molekulargewicht, das ein gewichtsmittleres Molekulargewicht von nicht weniger als 2000000 und nicht mehr als 4000000 aufweist, von 25 bis 40 Gew.-% beträgt.

3. Mikroporöse Polyolefinmembran nach einem der Ansprüche 1 oder 2, wobei eine Differenz zwischen einer Abschaltstarttemperatur in einer MD und einer maximalen Schrumpfungstemperatur in der MD nicht kleiner als 8,6°C ist.

4. Herstellungsverfahren für die mikroporöse Polyolefinmembran nach einem der Ansprüche 1 bis 3, wobei das Verfahren aufweist:
(a) Schmelzkneten eines Polyolefinharzes, das ein Polyolefin mit ultrahohem Molekulargewicht, das ein gewichtsmittleres Molekulargewicht von nicht weniger als 2000000 und nicht mehr als 4000000 aufweist, und eines Weichmachers;
(b) Extrudieren der im Schritt (a) erhaltenen Mischung und Formen der Mischung zu einer Folienform;
(c) Strecken der im Schritt (b) erhaltenen Folie in eine MD mit einer Streckvergrößerung von 1,3 bis 2,0-fach und dann Durchführen eines gleichzeitige biaxialen Streckens an der Folie in der MD und der TD mit einer Flächenvergrößerung von nicht weniger als 25-fach und einer Temperatur von 110 bis 120°C; und
(d) Extrahierens des Weichmachers aus dem im Schritt (c) erhaltenen gestreckten Film der und Trocknen des Films.

5. Separator für eine Sekundärbatterie mit nichtwässrigem Elektrolyten, der unter Verwendung der mikroporösen Polyolefinmembran nach einem der Ansprüche 1 bis 3 hegestellt wird.

6. Sekundärbatterie mit nichtwässrigem Elektrolyten, die den Separator für eine Sekundärbatterie mit nichtwässrigem Elektrolyten nach Anspruch 5 aufweist.

## Revendications

1. Membrane polyoléfinique microporeuse, présentant :
un différentiel de température non inférieur à 8,6 °C entre une température de début d'arrêt et une température au retrait maximal ; et
un diamètre de pore maximal inférieur à 0,036 µm ;
où la résistance à la traction est comprise entre 1.500 et 4.500 kgf/cm² ;
la teneur en polyoléfine ayant une masse moléculaire moyenne en poids non supérieure à 5,0 × 10⁵ n'est pas supérieure à 63 % en poids ; et
la teneur en polyoléfine ayant une masse moléculaire moyenne en poids non inférieure à 1,0 × 10⁶ n'est pas inférieure à 21 % en poids,
le taux de retrait entre le retrait thermique dans la direction MD et le retrait thermique dans la direction TD pour un maintien à 105 °C pendant 8 heures est inférieur à 0,9, la température de début d'arrêt, la température au retrait maximal, le diamètre de pore maximal,
la résistance à la traction et le retrait thermique étant mesurés conformément à la description.

2. Membrane polyoléfinique microporeuse selon la revendication 1, où une quantité ajoutée d'une polyoléfine à masse moléculaire très élevée, dont la masse moléculaire moyenne en poids n'est pas inférieure à 2.000.000 et n'est pas supérieure à 4.000.000, est comprise entre 25 et 40 % en poids.

3. Membrane polyoléfinique microporeuse selon la revendication 1 ou la revendication 2, où la différence entre une température de début d'arrêt dans la direction MD et une température au retrait maximal dans la direction MD n'est pas inférieure à 8,6 °C.

4. Procédé de production d'une membrane polyoléfinique microporeuse selon l'une des revendications 1 à 3, ledit procédé comprenant :
(a) le malaxage en phase fondue d'une résine polyoléfine contenant une polyoléfine à masse moléculaire très élevée dont la masse moléculaire moyenne en poids n'est pas inférieure à 2.000.000 et n'est pas supérieure à 4.000.000, et un plastifiant ;
(b) l'extrusion du mélange obtenu lors de l'étape (a) et le formage en feuille du mélange ;
(c) l'étirage de la feuille obtenue lors de l'étape (b) dans une direction MD avec un agrandissement par étirage de 1,3 à 2,0 fois, suivi de l'exécution d'un étirage biaxial simultané sur la feuille dans les directions MD et TD avec un agrandissement de surface non inférieur à 25 fois et une température comprise entre 110 et 120 °C ; et
(d) l'extraction du plastifiant du film étiré obtenu lors de l'étape (c) et le séchage du film.

5. Séparateur pour une batterie secondaire à électrolyte non aqueux, produit au moyen d'une membrane polyoléfinique microporeuse selon l'une des revendications 1 à 3.

6. Batterie secondaire à électrolyte non aqueux comprenant le séparateur pour une batterie secondaire à électrolyte non aqueux selon la revendication 5.
